(19) 

Europäisches
Patentamt
European
Patent Office
Office européen
des brevets

(11) **EP 4 459 232 A1**

(12) **EUROPEAN PATENT APPLICATION**

(43) Date of publication:
**06.11.2024 Bulletin 2024/45**

(21) Application number: **23211375.3**

(22) Date of filing: **22.11.2023**

(51) International Patent Classification (IPC):
**G01C 21/30** *(2006.01)* **G01C 21/00** *(2006.01)*

(52) Cooperative Patent Classification (CPC):
**G01C 21/30; G01C 21/3815; Y02T 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.05.2023 CN 202310493890**

(71) Applicant: **Guangzhou Xiaopeng Autopilot
Technology Co., Ltd.
Guangzhou, Guangdong 510000 (CN)**

(72) Inventors:
• **Zhang, Xiao
Guangzhou (CN)**
• **Fan, Yunfeng
Guangzhou (CN)**
• **Cui, Liuzheng
Guangzhou (CN)**

(74) Representative: **Isarpatent
Patent- und Rechtsanwälte
Barth Hassa Peckmann & Partner mbB
Friedrichstraße 31
80801 München (DE)**

(54) **MAP MATCHING AND MERGING METHOD, DEVICE, APPARATUS AND STORAGE MEDIUM**

(57) The present invention discloses a map matching and merging method, a device, an apparatus and a storage medium. The method includes: when a vehicle is detected to arrive at or approach a preset target scenario area, matching a vehicle coordinate system and a map coordinate system based on a ground element to obtain a matching result; and according to the matching result, merging a real-time perception and mapping result of the vehicle with a target map element, and outputting a merged map. The present invention renders it possible to only use high-precision maps, preferably lightweight high-precision maps, in preset target scenario areas (for instance complex scenario areas such as a large junction and a roundabout), thereby greatly reducing the amount of the map data, and reducing the costs for real-time generation and maintenance of the map. In addition, since only a small amount of map matching data is required, it also realizes rapid map matching in extreme scenario such as a large junction, thus improving the user's driving experience.

**FIG. 1**

EP 4 459 232 A1

**Description**

**Technical Field**

The present disclosure relates to the technical field of intelligent driving, in particular to a map matching and merging method, a device, an apparatus and a storage medium.

**Brief Description of the Related Art**

With the constant development of intelligent driving technology, high-precision maps play a very important role in the process of intelligent driving. Compared with ordinary electronic navigation maps, high-precision maps have more accurate and rich information to describe roads, for example, they can provide delineated drivable areas, slopes, curvatures, and traffic signs, etc.

In existing intelligent driving schemes based on high-precision maps, it usually makes real-time matching of vehicle pose and map based on a complete high-precision map of a certain city or region, and then uses a complete high-precision map to provide maps and navigation information for an intelligent driving system. However, the complete high-precision map has a large amount of data, and it is necessary to maintain the accuracy and freshness of a large amount of high-precision map data, resulting in high maintenance costs. In addition, traditional map matching requires map data over a long distance, which cannot achieve rapid matching in extreme scenarios such as large junctions.

**Summary of the Disclosure**

The main purpose of the embodiments of the present invention is to provide a map matching and merging method, a device, an apparatus, and a storage medium, aiming at realizing rapid matching of maps in specific areas in intelligent driving scenarios, and reducing map generation and maintenance costs.

In order to achieve the above purpose, an embodiment of the present invention provides a map matching and merging method, the method including:

when a vehicle is detected to arrive at or approach a preset target scenario area, matching a vehicle coordinate system and a map coordinate system based on a ground element to obtain a matching result; and
according to the matching result, merging a real-time perception and mapping result of the vehicle with a target map element, and outputting a merged map.

Optionally, said when a vehicle is detected to arrive at or approach a preset target scenario area, the step of matching a vehicle coordinate system and a map coordinate system based on a ground element to obtain a matching result includes:

when the vehicle is detected to arrive at or approach the preset target scenario area, initially aligning the vehicle coordinate system with the map coordinate system to obtain an initial conversion relationship from the map coordinate system to the vehicle coordinate system;
determining first ground elements and second ground elements in the real-time perception and mapping result of the vehicle and a target map;
based on the first ground elements in the real-time perception and mapping result of the vehicle and the target map, and in combination with the initial conversion relationship, calculating a rough-precision pose conversion matrix from the map coordinate system to the vehicle coordinate system to obtain a rough matching result;
based on the rough matching result, performing iterative closest point matching on the second ground elements in the real-time perception and mapping result of the vehicle and the target map to obtain a high-precision pose conversion matrix; and
converting a pose of the target map element by the high-precision pose conversion matrix, for converting the target map element from the map coordinate system to the vehicle coordinate system to obtain a high-precision matching result.

Optionally, the step of said based on the first ground elements in the real-time perception and mapping result of the vehicle and the target map, and in conjunction with the initial conversion relationship, calculating a rough-precision pose conversion matrix from the map coordinate system to the vehicle coordinate system to obtain a rough matching result includes:

encoding geometric information of the first ground elements in the real-time perception and mapping result of the vehicle and the target map, respectively, to obtain an encoding result;
based on internal consistency of the encoding result, constructing and solving a constraint equation to obtain a best matching result between the first ground elements in the real-time perception and mapping result of the vehicle and the target map; and
according to the best matching result and in combination with the initial conversion relationship, calculating a rough-precision pose conversion matrix from the map coordinate system to the vehicle coordinate system to obtain a rough matching result.

Optionally, the step of said according to the matching result, merging a real-time perception and mapping result of the vehicle with a target map element, includes:

according to the high-precision matching result, associating the ground element in the real-time perception and mapping result of the vehicle with matrix-converted target map elements; and
merging associated ground elements.

Optionally, the step of said according to the high-precision matching result, associating the ground element in the real-time perception and mapping result of the vehicle with matrix converted target map elements includes:
according to the high-precision matching result and the matrix-converted target map elements, searching and associating an arrow, a stop line, and a zebra crossing in the real-time perception and mapping result of the vehicle by following a principle that they are the same type and a spatial distance between them is the smallest, and searching and associating a lane line in the real-time perception and mapping result of the vehicle by following a principle that a parallel distance between lines is the smallest.
Optionally, the step of said merging associated ground elements includes:

selecting the target map element for the associated arrow, stop line, and zebra crossing to replace them; and
selecting the lane line in the real-time perception and mapping result of the vehicle for the associated lane line, and using the lane line in the target map to splice and complement the lane line in the real-time perception and mapping result.

Optionally, the step of said when the vehicle is detected to arrive at or approach the preset target scenario area, initially aligning the vehicle coordinate system with the map coordinate system to obtain an initial conversion relationship from the map coordinate system to the vehicle coordinate system includes:

when the vehicle is detected to arrive at or approach the preset target scenario area, acquiring GNSS positioning information of the vehicle and dead reckoning trajectory of the vehicle;
according to the GNSS positioning information of the vehicle, selecting driving trajectory data of the vehicle over a preset length; and
aligning the dead reckoning trajectory with the driving trajectory data to obtain the initial conversion relationship from the map coordinate system to the vehicle coordinate system.

Optionally, the preset target scenario includes at least one of the following: an junction area of a road and a roundabout area; and/or, said first ground element includes at least one of the following: a ground arrow, a stop line, and a zebra crossing; and/or, said second ground element includes at least one of the following: a solid lane line, a dashed line segment, and a ground arrow.
Optionally, the first ground element is determined by a confidence level.
An embodiment of the present invention further provides a map matching and merging device, including:

a matching module, configured to match a pose of a vehicle with a map coordinate system based on ground element when the vehicle is detected to arrive at or approach a preset target scenario area to obtain a matching result; and
a merging module, configured to merge a real-time perception and mapping result of the vehicle with a target map element according to the matching result, and output a merged map.

An embodiment of the present invention further provides a navigation apparatus, including a memory, a processor, and a computer program stored in the memory and capable of running on the processor, and configured to implement the above-mentioned map matching and merging method when it is executed by the processor.
An embodiment of the present invention further provides a computer-readable storage medium, on which a computer program is stored, and the computer program is configured to implement the above-mentioned map matching and merging method when it is executed by the processor.

In the map matching and merging method, a device, an apparatus, and a storage medium provided in the embodiments of the present invention, when the vehicle is detected to arrive at or approach the preset target scenario area, the vehicle coordinate system and the map coordinate system are matched based on a ground element to obtain a matching result; and according to the matching result, the real-time perception and mapping result of the vehicle and the target map element are merged, and the merged map is outputted. With the solution of the embodiment of the present invention, it is possible to use high-precision maps, preferably lightweight high-precision maps, only in preset target scenario areas (for instance complex scenario areas such as a large junction and a roundabout), thereby greatly reducing the amount of map data, and further reducing the cost for generation, preferably real-time generation, and maintenance of maps. In addition, because only a small amount of map matching data is required, it also realizes rapid map matching in extreme scenarios such as a large junction, and improves the user's driving experience.

**Brief Description of the Drawings:**

FIG. 1 is a schematic diagram of functional modules of an apparatus to which a map matching and merging device of the present invention belongs;
FIG. 2 is a schematic flow chart of a first embodiment of a map matching and merging method of the present invention;
FIG. 3 is a schematic diagram of a scenario area of large junction in an embodiment of the map matching and merging method of the present invention;
FIG. 4a and FIG.4b are schematic diagrams of a scenario area of roundabout in an embodiment of the present invention;
FIG. 5 is a detailed schematic flow chart of matching a vehicle coordinate system and a map coordinate system based on ground elements to obtain the matching result when a vehicle is detected to arrive at or approach a preset target scenario area in an embodiment of the map matching and merging method of the present invention;
FIG. 6a is a schematic diagram of matching the first ground elements in the real-time perception and mapping result of the vehicle and a target map in an embodiment of the present invention;
FIG. 6b is a schematic diagram of the optimal matching result acquired by constructing and solving a constraint equation in an embodiment of the present invention;
FIG. 7 is a detailed schematic flow chart of merging the real-time perception and mapping result of the vehicle and the target map element according to the matching result and outputting the merged map in an embodiment of the present invention;
FIG. 8 is a schematic complete flow chart of online real-time matching and merging of lightweight high-precision maps in an embodiment of the present invention;
FIG. 9 is a schematic diagram of functional modules of the first embodiment of the map matching and merging device of the present invention.

The implementation of the purpose of the present invention, functional characteristics and advantages will be further described in conjunction with the embodiments and with reference to the accompanying drawings.

**Detailed Description of the Preferred Embodiment**

It should be appreciated that the specific embodiments described here are only used to explain the present invention, not to limit the present invention.

The main solution of the embodiment of the present invention is: when a vehicle is detected to arrive at or approach a preset target scenario area, a vehicle coordinate system and a map coordinate system are matched based on ground elements to obtain a matching result; according to the matching result, real-time perception and mapping results of the vehicle are merged with target map elements, and the merged map is outputted. With the solution of the embodiment of the present invention, it is possible to use high-precision maps, preferably lightweight high-precision maps, only in preset target scenario areas (for example complex scenario areas such as a large junction and a roundabout), thereby greatly reducing the amount of map data, and further reducing the costs for generation and maintenance of maps. In addition, because only a small amount of map matching data is required, it also achieves rapid matching of map in extreme scenarios such as a large junction, and improves the user's driving experience.

Technical terms involved in the embodiments of the present invention are as follows:

GNSS: Global Navigation Satellite System, being a space-based radio navigation and positioning system that provides users with all-weather three-dimensional coordinates, speed and time information at any place on the Earth's surface or in the near-Earth space.

Dead reckoning: a technology based on an IMU inertial measurement unit, which calculates the position and direction at the current moment based on the position and direction at the previous moment.

Iterative closest point matching: Iterative Closest Points Algorithm, ICPA, the basic principle of which is to assume that two data sets P and Q have been given, and the spatial transformation f of the two point sets is given so that they can perform spatial matching. The basic idea thereof is that it matches the data according to certain geometric characteristics, and sets these matching points as imaginary corresponding points, then solves the motion parameters according to this corresponding relationship, and then uses these motion parameters to transform the data, and determines a new corresponding relationship with the same geometric characteristics, and repeats the above process until a matching result is acquired.

The embodiment of the present invention considers that: in the existing intelligent driving solution based on high-precision maps, the real-time matching of the vehicle pose and the map is usually performed based on the complete high-precision map of a certain city or region, and then the complete high-precision map is used to provide maps and navigation information for intelligent driving systems. However, the complete high-precision map has a large amount of data, and it is necessary to maintain the accuracy and freshness of a large amount of high-precision map data, resulting in high maintenance costs. In addition, since a single-point of GNSS has a positioning precision at the level of 1-10 m, the urban occlusion environment cannot be positioned at all, and the commonly used iterative closest point matching method is not robust enough in this case, and is easy to make a wrong match; further, the traditional map matching requires map data over a very long distance, and involves a large amount of map data, and for extremely complex scenarios such as a large junction and a roundabout, the data loading is slow during the map initialization process, resulting in that existing solutions cannot achieve rapid matching in extreme scenarios such as a large junction and a roundabout.

Therefore, the embodiment of the present invention proposes a solution, which renders it possible to only use high-precision maps, preferably lightweight high-precision maps, in complex scenario areas such as a large junction, a roundabout, and a viaduct. In this way, the initial matching range required by the map is relatively small, and large-area matching is not required, which greatly reduces the amount of map data, so that the map of the entire junction and roundabout can be quickly loaded, and the costs for generation and maintenance of maps are reduced. In addition, because only a small amount of map matching data is required, it also realizes rapid map matching in extreme scenarios such as a large junction.

Additionally, in some extreme scenarios such as a large junction, a roundabout, and a viaduct, due to the limit of viewing angle of on-board cameras, poor lighting, rain and snow, etc., it is difficult for the vehicle perception to detect the environmental information required for intelligent driving in a timely and accurate manner, such as lane lines, stop lines, crosswalks, traffic lights, etc., which therefore reduces the available scope of use of intelligent driving. With the solution of the embodiment of the present invention, high-precision maps, preferably lightweight high-precision maps, of extreme scenarios such as a junction, a roundabout, and a viaduct established in advance are used to match with the real-time perception and mapping results of vehicles, and they are merged and outputted, whereby the embodiment of the present invention complements each other's advantages, and provides environmental information of greater scope for traffic planning and control.

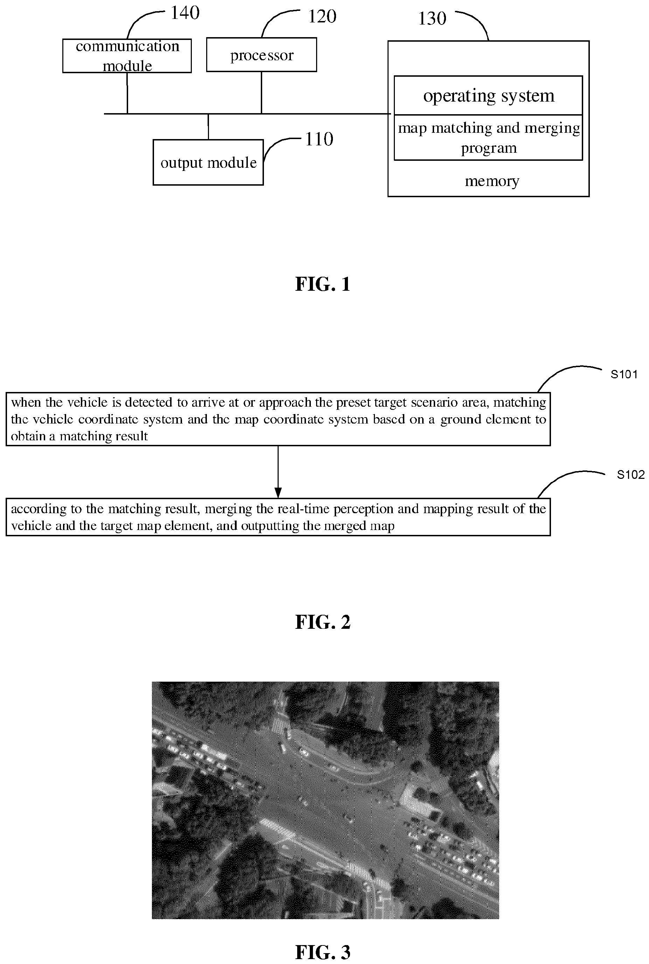

Specifically, referring to FIG. 1, it is a schematic diagram of functional modules of an apparatus to which a map matching and merging device of the present invention belongs. The map matching and merging device may be a device independent of the apparatus and capable of performing data processing, which may be carried on the apparatus in the form of a hardware or a software. The apparatus can be an intelligent mobile terminal with a data processing function such as a mobile phone or a tablet computer, or can be a stationary apparatus with a data processing function (such as a vehicle-mounted navigation apparatus) or a server.

In this embodiment, the apparatus to which the map matching and merging device belongs at least includes an output module 110, a processor 120, a memory 130 and a communication module 140.

The memory 130 stores an operating system and a map matching and merging program; and the output module 110 can be a display screen and the like. The communication module 140 can include a WIFI module, a Bluetooth module, etc. The apparatus communicates with external apparatuses or servers by the communication module 140.

When the map matching and merging program in the memory 130 is executed by the processor, the following steps are implemented:

when a vehicle is detected to arrive at or approach a preset target scenario area, a vehicle coordinate system and a map coordinate system are matched based on ground elements to obtain a matching result; and
according to the matching result, real-time perception and mapping result of the vehicle and a target map element are merged, and the merged map is outputted.

Further, when the map matching and merging program in the memory 130 is executed by the processor, the following steps are also implemented:

when a vehicle is detected to arrive at or approach a preset target scenario area, the vehicle coordinate system and the map coordinate system are initially aligned to obtain an initial conversion relationship from the map coordinate system to the vehicle coordinate system;

first ground elements and second ground elements in the real-time perception and mapping result of the vehicle and the target map are determined;

based on the first ground elements in the real-time perception and mapping result of the vehicle and the target map, and in combination with the initial conversion relationship, a rough-precision pose conversion matrix is calculated from the map coordinate system to the vehicle coordinate system to obtain a rough matching result;

based on the rough matching result, the iterative closest point matching is performed on the second ground elements in the real-time perception and mapping result of the vehicle and the target map to obtain a high-precision pose conversion matrix; and

the pose of the target map element is converted by the high-precision pose conversion matrix, for converting the target map element from the map coordinate system to the vehicle coordinate system to obtain a high-precision matching result.

Further, when the map matching and merging program in the memory 130 is executed by the processor, the following steps are also implemented:

the geometric information of the first ground elements in the real-time perception and mapping result of the vehicle and the target map are encoded, respectively, to obtain the encoding result;

based on the internal consistency of the encoding result, a constraint equation is constructed and solved to obtain the best matching result between the first ground elements in the real-time perception and mapping result of the vehicle and the target map; and

according to the best matching result and in combination with the initial conversion relationship, a rough-precision pose conversion matrix is calculated from the map coordinate system to the vehicle coordinate system to obtain a rough matching result.

Further, when the map matching and merging program in the memory 130 is executed by the processor, the following steps are also implemented:

according to the high-precision matching result, the ground element in the real-time perception and mapping result of the vehicle is associated with the matrix-converted target map element; and

the associated ground elements are merged.

Further, when the map matching and merging program in the memory 130 is executed by the processor, the following steps are also implemented:

according to the high-precision matching results and the matrix-converted target map elements, the arrows, stop lines, and zebra crossings in the real-time perception and mapping results of the vehicle are searched and associated by following a principle that they are the same type and the spatial distance between them is the smallest, and the lane lines in the real-time perception and mapping results of the vehicle are searched and associated by following a principle that the parallel distance between lines is the smallest.

Further, when the map matching and merging program in the memory 130 is executed by the processor, the following steps are also implemented:

map elements are selected for the associated arrows, stop lines, and zebra crossings to replace them; and

the lane lines in the real-time perception and mapping result are selected for the associated lane lines, and the lane lines in the map are used to splice and complement the lane lines in the real-time perception and mapping result.

Further, when the map matching and merging program in the memory 130 is executed by the processor, the following steps are also implemented:

when the vehicle is detected to arrive at or approach a preset target scenario area, the GNSS positioning information of the vehicle and the dead reckoning trajectory of the vehicle are acquired;

according to the GNSS positioning information of the vehicle, the driving trajectory data of the vehicle over a preset length is selected; and

the dead reckoning trajectory is aligned with the driving trajectory data to obtain an initial conversion relationship from the map coordinate system to the vehicle coordinate system.

In this embodiment, with above solution, in the case that the vehicle is detected to arrive at or approach the preset target scenario area, the vehicle coordinate system and the map coordinate system are matched based on the ground elements to obtain the matching result; according to the matching result, the real-time perception and mapping result of the vehicle and the target map element are merged, and the merged map is outputted. With the solution of the embodiment of the present invention, it is possible to use high-precision maps, preferably lightweight high-precision maps, only in the preset target scenario area (such as the complex scenario areas such as a large junction and a roundabout), thereby greatly reducing the amount of map data, and further reducing the costs for generation and maintenance of maps. In addition, because only a small amount of map matching data is required, it also realizes rapid map matching in extreme scenarios such as a large junction, and improves the user's driving experience.

Based on the above apparatus architecture but not limited to the above architecture, method embodiments of the present invention are disclosed.

The execution body of the method in the embodiment may be a map matching and merging device. The map matching and merging device may be a device independent of the apparatus and capable of performing data processing, which may be carried on the apparatus in the form of a hardware or a software. The apparatus can be a navigation apparatus or a vehicle-mounted apparatus. The navigation apparatus can be a vehicle-mounted navigation apparatus, or a mobile terminal with a navigation function. This embodiment takes the vehicle-mounted navigation apparatus installed on the vehicle as an example, and uses the vehicle-mounted navigation apparatus to realize matching and merging of map during driving of the vehicle, in order to provide map and navigation information for the vehicle intelligent driving system, especially to realize fast matching of specific area map in intelligent driving scenarios, and to reduce the costs for generation and maintenance of map.

Referring to FIG. 2, it is a schematic flow chart of the first embodiment of a map matching and merging method of the present invention. The map matching and merging method includes:

At step S101, when the vehicle is detected to arrive at or approach the preset target scenario area, the vehicle coordinate system and the map coordinate system are matched based on ground elements to obtain a matching result.

The solution of this embodiment can be applied to various scenarios that require maps and navigation, such as traffic roads, parking lots and other intelligent/automatic driving scenarios. This embodiment takes the scenario of an autonomous vehicle on a traffic road as an example.

In this embodiment, the vehicle has an automatic driving system which has a real-time perception and mapping function, wherein perception is to imitate the human eye to obtain surrounding environmental information. Therefore, sensors are required to complete information collection. The sensors currently used in the field of autonomous driving can include cameras, lidar, millimeter-wave radar, etc., wherein with the perception of sensors, traffic signs, obstacles, etc. can be detected, so as to meet the needs of automatic driving and navigation of the vehicle.

The preset target scenario area involved in this embodiment may be complex scenario areas such as a junction (especially a large junction), a roundabout, and a viaduct.

In traffic roads, for autonomous vehicles, high-precision maps are usually used for intelligent driving. In traditional solutions, real-time matching of vehicle pose and map is usually based on a complete high-precision map of a certain city or region, and then the complete high-precision map is used to provide map and navigation information for the intelligent driving system. However, a complete high-precision map has a large amount of data, and it is necessary to maintain the accuracy and freshness of a large amount of high-precision map data, resulting in high maintenance costs. Furthermore, traditional map matching requires map data over a long distance, and therefore it cannot realize rapid matching in extreme scenarios such as a large junction, a roundabout and a viaduct.

In this embodiment, high-precision maps, preferably lightweight high-precision maps, can be set only in complex scenario areas such as a large junction, a roundabout, and a viaduct, and high-precision maps, preferably lightweight high-precision maps, do not need to be set in other areas. For example, in other areas, perception data from the sensors of the vehicle can be used for real-time perception and mapping. That is, the solution in this embodiment uses lightweight map matching, which can greatly reduce the data volume of high-precision maps, preferably lightweight high-precision maps, thereby reducing the costs for generation and maintenance of high-precision maps, preferably lightweight high-precision maps. In addition, because only a small amount of high-precision map matching data, preferably lightweight high-precision map matching data, is required, it also realizes fast map matching in extreme scenarios such as a large junction.

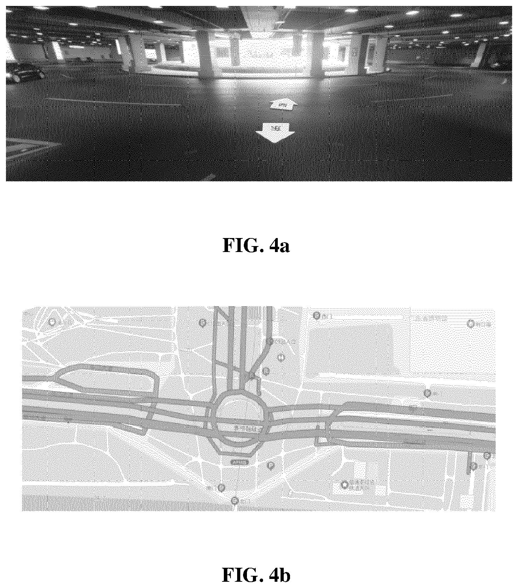

The scenario area of the large junction can be referred to FIG. 3, and the scenario area of the roundabout can be referred to FIGS. 4a and 4b.

In the specific implementation, first, when the vehicle is detected to arrive at or approach the preset target scenario area such as large junction, roundabout, etc., the initial alignment of the vehicle coordinate system with the map coordinate system is performed, and the vehicle coordinate system and the map coordinate system are matched based on ground elements to obtain the matching result.

For example, the matching of the vehicle coordinate system and the map coordinate system can be completed before the vehicle enters the junction, so that the map elements in the junction area can be merged based on the matching result.

The vehicle coordinate system is a temporary coordinate system established at starting time of the vehicle. For example, it may be a coordinate system established with the current position of the vehicle as the origin at the starting time of the vehicle.

Taking new energy vehicle as an example, the starting time of the vehicle can be determined by whether the vehicle is powered on, and the time when the vehicle is powered on is the starting time of the vehicle.

The map coordinate system may refer to the coordinate system of the high-precision map, preferably lightweight high-precision map, which is the global coordinate system, and is also the world coordinate system. This embodiment takes a high-precision map, preferably lightweight high-precision map, as an example. The target map referred to below in this embodiment may be a high-precision map, preferably lightweight high-precision map.

As mentioned above, when the vehicle is detected to arrive at or approach the preset target scenario areas such as large junction, roundabout, and viaduct, the initial alignment of the vehicle coordinate system with the map coordinate system is performed. The purpose of the initial alignment is to obtain the initial conversion relationship from the map coordinate system to the vehicle coordinate system.

Specifically, the initial conversion relationship may have the precision at the level of 1 m-50 m.

Specifically, the initial alignment of the vehicle coordinate system and the map coordinate system includes that the vehicle pose and the map coordinate system are matched and aligned. The vehicle pose includes the position and attitude of the vehicle. The attitude of the vehicle includes the rotation relationship of the vehicle, part of which is orientation, and part of which is roll and yaw.

After acquiring the initial conversion relationship from the map coordinate system to the vehicle coordinate system by the initial alignment of the vehicle coordinate system with the map coordinate system, the vehicle coordinate system and the map coordinate system are matched based on the initial conversion relationship and ground elements to obtain the matching result.

Specifically, as an implementation, the matching of the vehicle coordinate system and the map coordinate system may include rough matching and fine matching.

Specifically, rough matching mainly uses ground elements such as ground arrows, stop lines, and zebra crossings to complete rough matching.

For example, in an embodiment, the ground elements in the real-time perception and mapping results of the vehicle and the target map (this embodiment refers to the high-precision map, preferably lightweight high-precision map) can be used to calculate the rough-precision pose conversion matrix from the map coordinate system to the vehicle coordinate system in combination with the initial conversion relationship and to obtain rough matching result.

The real-time perception and mapping results of the vehicle include: the perception data acquired by the vehicle via real-time perception of the road by the vehicle-mounted sensor, and the map data acquired by real-time mapping for the perception data. The map data includes various parameters of ground elements, such as ground arrows, stop lines, zebra crossings, etc.

Fine matching mainly uses ground elements such as a ground lane line to complete the fine matching.

For example, in an embodiment, based on the rough matching result, the ground elements in the real-time perception and mapping result of the vehicle can be matched with the ground elements in the target map to obtain a high-precision pose conversion matrix.

The position precision of the high-precision pose conversion matrix can reach 20 cm, and the angle precision can reach 0.5 degrees.

Then the pose conversion on the target map element is performed by the high-precision pose conversion matrix, for converting the target map element from the map coordinate system to the vehicle coordinate system to obtain a high-precision matching result.

The high-precision matching result can be used as the final matching result in the solution of this embodiment, and subsequently according to the final matching result, the real-time perception and mapping result of the vehicle and the target map element can be merged.

It should be noted that the above matching strategy in this embodiment can be selected according to the actual situation. For example, in other embodiments, only rough matching can be performed, or fine matching can be directly performed.

At step S102, according to the matching result, the real-time perception and mapping result of the vehicle and the target map element are merged, and the merged map is outputted.

Specifically, in an embodiment, according to the high-precision matching result, for all ground elements (including ground arrows, stop lines, zebra crossings, lane lines, etc.) in the perception and mapping result of the vehicle, the ground elements of the real-time perception and mapping result of the vehicle are associated with the ground elements in the target map

(such as a high-precision map, preferably lightweight high-precision map), so that the ground elements can be merged according to the association result, and the merged map is finally outputted.

In this embodiment, by the above solution, when the vehicle is detected to arrive at or approach the preset target scenario area, the vehicle coordinate system and the map coordinate system are matched based on the ground elements to obtain the matching result; according to the matching result, the real-time perception and mapping result of the vehicle and the target map element are merged, and the merged map is outputted. With the solution of the embodiment of the present invention, it is possible to use high-precision maps, preferably lightweight high-precision maps, only in the preset target scenario areas (for example complex scenario areas such as large junction and roundabout), thereby greatly reducing the amount of map data, and further reducing the costs for generation and maintenance of maps. In addition, because only a small amount of map matching data is required, it also realizes rapid map matching in extreme scenarios such as a large junction, and improves the user's driving experience.

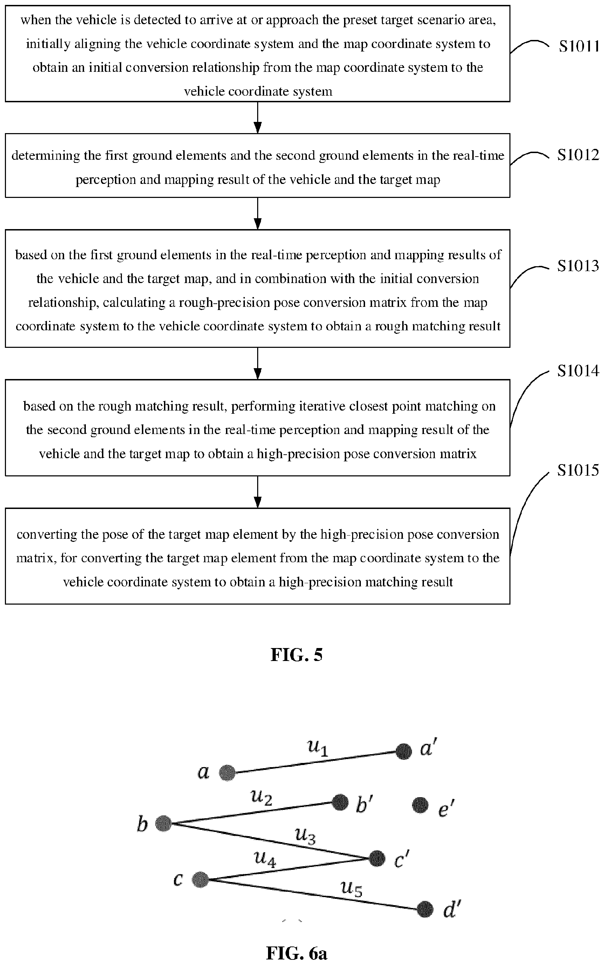

Referring to FIG. 5, it is a detailed schematic flow chart of matching a vehicle coordinate system and a map coordinate system based on ground elements to obtain the matching result when a vehicle is detected to arrive at or approach a preset target scenario area in an embodiment of the map matching and merging method of the present invention.

As shown in FIG. 5, this embodiment details the above step S101 based on the above embodiment shown in FIG. 2.

In this embodiment, when the vehicle is detected to arrive at or approach the preset target scenario area, the vehicle coordinate system and the map coordinate system are matched based on the ground elements to obtain the matching result, the above step S101 may include:

at step S1011, when the vehicle is detected to arrive at or approach the preset target scenario area, the vehicle coordinate system and the map coordinate system are initially aligned to obtain an initial conversion relationship from the map coordinate system to the vehicle coordinate system;

at step S1012, the first ground elements and the second ground elements in the real-time perception and mapping result of the vehicle and the target map are determined;

at step S1013, based on the first ground elements in the real-time perception and mapping results of the vehicle and the target map, and in combination with the initial conversion relationship, a rough-precision pose conversion matrix is calculated from the map coordinate system to the vehicle coordinate system to obtain a rough matching result;

at step S1014, based on the rough matching result, iterative closest point matching is performed on the second ground elements in the real-time perception and mapping result of the vehicle and the target map to obtain a high-precision pose conversion matrix; and

at step S1015, the pose of the target map element is converted by the high-precision pose conversion matrix, for converting the target map element from the map coordinate system to the vehicle coordinate system, to obtain a high-precision matching result.

Specifically, in an embodiment, when the vehicle is detected to arrive at or approach the preset target scenario area, it is required to initially align the vehicle coordinate system with the map coordinate system to obtain the initial conversion relationship from the map coordinate system to the vehicle coordinate system, in order to convert the map elements in the map coordinate system to the vehicle coordinate system.

For the initial alignment of the vehicle coordinate system with the map coordinate system to obtain the initial conversion relationship from the map coordinate system to the vehicle coordinate system, the following solution can be adopted:

First, when the vehicle is detected to arrive at or approach the preset target scenario area, the GNSS positioning information of the vehicle and the dead reckoning trajectory of the vehicle are acquired.

Further, the GNSS positioning information of the vehicle can be acquired via the positioning module on the vehicle.

Further, the map coordinate system may refer to the coordinate system of the high-precision map, preferably lightweight high-precision map, the GNSS positioning information of the vehicle is related to the high-precision map, preferably lightweight high-precision map, and the coordinate system of the high-precision map, preferably lightweight high-precision map, and the coordinate system of the GNSS positioning are both global coordinate systems.

Further, the dead reckoning trajectory of the vehicle is the vehicle DR (dead reckoning) trajectory, which can be acquired by dead reckoning using sensors such as wheel speed sensors and IMUs of the vehicle.

Then, according to the GNSS positioning information of the vehicle, the driving trajectory data of the vehicle over a preset length is selected.

Further, the preset length can be set according to actual conditions.

For example, the GNSS positioning information of the vehicle is screened, and the data over a vehicle trajectory length of 1 km is selected.

Then, the dead reckoning trajectory of the vehicle and driving trajectory data are aligned, and the initial conversion relationship from the map coordinate system to the vehicle coordinate system is calculated, and the initial conversion relationship is a conversion matrix.

Wherein, the initial conversion relationship may have the precision at the level of 1 m - 50 m.

After that, according to the GNSS positioning information of the vehicle, the map elements within the preset distance (such as 300m) near the current vehicle position can be acquired, and according to the initial conversion relationship calculated above, the map elements of the high-precision map, preferably lightweight high-precision map, can be converted from the map coordinate system to the vehicle coordinate system.

Furthermore, the rough position of the map elements in the vehicle coordinate system can be acquired with the accuracy being at the level of 1 m - 50 m.

Then, the rough matching between the vehicle coordinate system and the map coordinate system can be completed by combining the initial conversion relationship and using ground elements such as ground arrows, stop lines, and zebra crossings.

In an embodiment, the first ground elements and the second ground elements in the real-time perception and mapping result of the vehicle and the target map can be determined, and based on the first ground elements in the real-time perception and mapping result of the vehicle and the target map, and in combination with the initial conversion relationship, the rough-precision pose conversion matrix from the map coordinate system to the vehicle coordinate system is calculated, and to obtain a rough matching result.

The first ground element may include a ground arrow, a stop line, a zebra crossing, and the like. The first ground element may be determined by a confidence level.

In this embodiment, the first ground element is a ground element with a high confidence level.

Further, the ground elements with a high confidence level generally refer to the ground elements that are relatively common in the road, are not easily blocked, are relatively easy to detect, or have a high frequency of occurrence, such as a ground arrow, a stop line, and a zebra crossing. When the vehicle performs perception and mapping in real time, the ground elements with high a confidence level are designed and updated.

Further, the second ground element may include a solid lane line, a dotted line segment, a ground arrow, and the like.

In this embodiment, for the first ground elements with a high confidence level in the real-time perception and mapping result of the vehicle and in the target map, the rough-precision pose conversion matrix from the map coordinate system to the vehicle coordinate system is calculated in combination with the initial conversion relationship, and to obtain a rough matching result.

Specifically, in an embodiment, based on the first ground elements in the real-time perception and mapping result of the vehicle and the target map and in combination with the initial conversion relationship, calculating the rough-precision pose conversion matrix from the map coordinate system of the map to the vehicle coordinate system to obtain the rough matching result, includes following steps:

firstly, the geometric information of the first ground elements in the real-time perception and mapping result of the vehicle and the target map are encoded, respectively;

further, the geometric information generally refers to geometric information such as the position, orientation, and size of ground elements such as a ground arrow, a stop line, and a zebra crossing. It is generally divided into two types: points (such as arrows) and lines (such as stop lines, zebra crossings, and dotted line segments, etc.).

When being encoded, the center point and orientation are calculated for various first ground elements, and then, based on the center point and orientation, the first ground elements of two maps composed of the real-time perception and mapping result of the vehicle and the target map (in this embodiment it can refer to the pre-established high-precision map, preferably lightweight high-precision map) can be matched to generate candidate matching pairs.

Then, all candidate matching pairs are tested and scored.

Further, if the distance between a candidate matching pair is smaller and the coincidence degree is higher, the score is higher. Specifically, the score of candidate matching pairs can consider the following factors: point-to-point distance, point-to-line center point distance, line-to-line center point distance and the proportion of coincident distance between the lines in the line length.

Based on the above, the encoding result is acquired for the geometric information of the first ground elements in the real-time perception and mapping result of the vehicle and the target map.

Then, based on the internal consistency of the encoding result, a constraint equation is constructed and solved to obtain the best matching result of the first ground elements in the real-time perception and mapping result of the vehicle and the target map;

That is, the internal consistency of the encoding result of the geometric information is used to construct a constraint equation and solve a nonlinear optimization problem, and the solution acquired is the best matching result of these ground elements. For example, a certain ground element in a high-precision map, preferably lightweight high-precision map, and a certain ground element in the real-time perception and mapping result of the vehicle are considered to be the best matching result.

The following, by example, describes in detail the process of using the internal consistency of the encoding results of geometric information, constructing constraint equations, solving a nonlinear optimization problem, and acquiring the best matching results of these ground elements through examples:

As shown in FIG. 6a, the points a, b, and c on the left represent the ground elements of perception and mapping result of the vehicle, and the points a', b', c' on the right represent the target map elements, and u1-u5 are possible matching pairs, u1-u5 are scored respectively, and then the optimization problem is solved.

Further, in order to obtain the optimal matching relationship, the problem can be modeled as a nonlinear optimization problem, expressed by the following formula (1):

$$\underset{u \in \{0,1\}^n}{\text{maximize}} \quad \frac{u^\top M u}{u^\top u}$$
$$\text{subject to} \quad u_i u_j = 0 \quad \text{if } M(i,j) = 0, \ \forall_{i,j}, \quad (1)$$

where, u represents the matching relationship vector, in which each element represents one matching pair; i and j are element numbers, which are natural numbers; and M represents the scoring matrix in the above steps, as shown in Table 1 below:

Table 1

|     | u1 | u2 | u3 | lu4 | u5 |
| --- | --- | --- | --- | --- | --- |
| u1  | 1  | 1  | 0  | 1   | 0  |
| u2  | 1  | 1  | 0  | 1   | 0  |
| u3  | 0  | 0  | 1  | 0   | 0  |
| u4  | 1  | 1  | 0  | 1   | 0  |
| u5  | 0  | 0  | 1  | 0   | 1  |

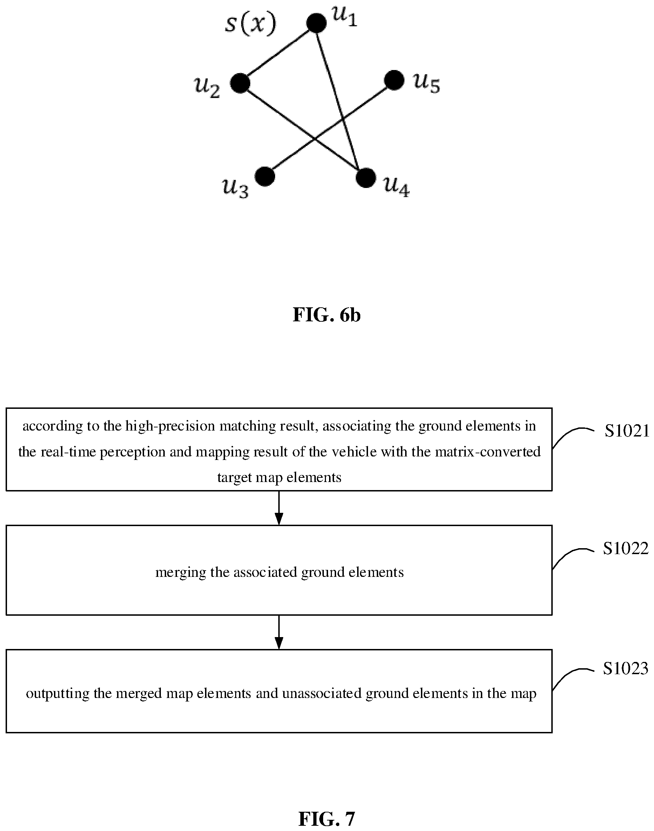

wherein, the acquired solution is shown in FIG. 6b. FIG. 6b shows that u1, u2, u4 are the optimal solution, that is, u3, u5 are wrong matching results. Therefore u1, u2, and u4 are kept. The acquired optimal solution is the best matching result for these ground elements.

Then, according to the best matching result acquired above, and in combination with the initial conversion relationship, a rough-precision pose conversion matrix is calculated from the map coordinate system to the vehicle coordinate system to obtain a rough matching result.

The rough matching result is a conversion matrix with higher precision than the above initial conversion relationship.

After the rough matching result is acquired, the rough matching result can be used to perform specific pose conversion on the target map element in the high-precision map, preferably lightweight high-precision map.

Specifically, in an embodiment, iterative closest point matching (ICP) can be performed on the ground elements (including a solid lane line, a dashed line segment, a ground arrow, and the like) in the high-precision map, preferably lightweight high-precision map, and the real-time perception and mapping of the vehicle to obtain high-precision pose conversion matrix.

Further, the position precision of the high-precision pose conversion matrix can reach 20cm, and the angle precision can reach 0.5 degrees.

Iterative closest point matching (ICP) is a matching algorithm. This embodiment uses the iterative closest point matching algorithm to perform high-precision matching on the arrows, dotted line segments, and lane lines in the real-time perception and mapping result of the vehicle and the target map. The specific matching principle is as follows:

R and t involved in the following are the rotation matrix and the translation matrix of the pose conversion matrix to be estimated respectively.

First, point-to-point constraints are constructed on the endpoints of an arrow and a dashed line segment. Taking the arrow as an example, for an arrow point in real-time perception and mapping result, an arrow point nearest to the arrow point in real-time perception and mapping result is searched in the high-precision map, preferably lightweight high-precision map, and the point-to-point distance constraint is constructed. Specifically it is calculated using the following formula (2):

$$\hat{\mathbf{q}}_i = \mathrm{argmin} \left\| \mathbf{R}\,\mathbf{p}_i + \mathbf{t} - \mathbf{q} \right\|.$$

$$(2)$$

where, $p_i$ is the sampling point of the arrow point in the real-time perception and mapping result, q represents the nearest arrow point searched in the high-precision map, preferably lightweight high-precision map, $\hat{q}_i$ represents the residual error, and R and t are the rotation matrix and the translation matrix of the pose conversion matrix to be estimated, respectively.

The lane line is constructed with point-to-line constraints. For a sampling point of lane line in the real-time perception and mapping result, two nearest sampling points of lane line are searched from the lane lines in the high-precision map, preferably lightweight high-precision map, and point-to-line (it is composed of two Points) distance constraint is constructed. It can be calculated using the following formula (3):

$$\hat{q}_i = argmin \left\| \frac{(R\,p_i + t\,)^T * L}{\sqrt{L_1^2 + L_2^2}} \right\|$$

$$(3)$$

where, $p_i$ is the sampling point of lane line in real-time perception and mapping result, L is the straight line formed by two sampling points L1 and L2 of lane line in the high-precision maps, preferably lightweight high-precision maps, $\hat{q}_i$ represents the residual error, and R and t are the rotation matrix and the translation matrix of the pose conversion matrix to be estimated, respectively.

Then, by solving this nonlinear optimization problem, an optimized high-precision pose conversion matrix can be acquired.

After acquiring the high-precision pose conversion matrix, the high-precision pose conversion matrix is used to perform pose conversion on the ground elements of the high-precision map, preferably lightweight high-precision map, and the ground elements of the high-precision map, preferably lightweight high-precision map, is converted from the map coordinate system to the vehicle coordinate system, and thus high-precision matching result is acquired.

In this embodiment, with above solution, when the vehicle is detected to arrive at or approach the preset target scenario area, the vehicle coordinate system and the map coordinate system are matched based on the ground elements to obtain the matching result; according to the matching result, the real-time perception and mapping result of the vehicle and the target map element are merged, and the merged map is outputted. Further, the matching of the vehicle coordinate system and the map coordinate system includes rough matching and fine matching. The high-precision pose conversion matrix is acquired by fine matching, and is used to perform pose conversion on the target map element, for converting the target map element from the map coordinate system to the vehicle coordinate system, to obtain a high-precision matching result. With the solution of the embodiment of the present invention, it is possible to use high-precision maps, preferably lightweight high-precision maps, only in the preset target scenario area (for instance the complex scenario areas such as a large junction and a roundabout), thereby greatly reducing the amount of map data, and further reducing the costs for generation and maintenance of maps. In addition, because only a small amount of map matching data is required, it also realizes rapid map matching in extreme scenarios such as a large junction, and improves the user's driving experience. Additionally, traditional maps only rely on single-point GNSS positioning, and have positioning precision at the level of 1-10 m, resulting in that the urban occlusion environment cannot be positioned at all and the commonly used iterative closest point matching method is not robust enough in this case, and it is easy to make a wrong match; compared with the traditional maps, the solution of this embodiment improves the matching accuracy, preferably both matching accuracy and robustness, of the map by the rough matching and the fine matching of the vehicle coordinate system and the map coordinate system.

Referring to FIG. 7, it is a detailed schematic flow chart of merging the real-time perception and mapping result of the vehicle and the target map element according to the matching result and outputting the merged map of the present invention.

As shown in FIG. 7, this embodiment details the above step S102 based on the above embodiment shown in FIG. 5.

In this embodiment, the step S102 of merging the real-time perception and mapping result of the vehicle with the target map element according to the matching result, and outputting the merged map may include:

> At step S1021, according to the high-precision matching result, the ground element in the real-time perception and mapping result of the vehicle is associated with the matrix-converted target map element;
> At step S1022, the associated ground elements are merged; and
> At step S1023, the merged map elements and unassociated ground elements are outputted in the map.

Specifically, in order to merge the real-time perception and mapping result of the vehicle and the target map element, this embodiment firstly associates all the ground elements (including a ground arrow, a stop line, a zebra crossing, a lane line, etc.) in the real-time perception and mapping results of the vehicle with the ground elements in the high-precision map, preferably lightweight high-precision map, according to the high-precision matching result, and merges them according to the association results. Specifically, the associated ground elements can be merged, and the unassociated ground elements can be outputted directly.

In an embodiment, associating the ground elements in the real-time perception and mapping result of the vehicle with the matrix-converted target map element according to the high-precision matching result, may include following steps:

according to the high-precision matching results and the matrix-converted target map elements, the arrow, stop line, and zebra crossing in the real-time perception and mapping result of the vehicle are searched and associated by following a principles that they are the same type and the spatial distance between them are the smallest, and the lane line in the real-time perception and mapping result of the vehicle is searched and associated by following a principle that the parallel distance between lines is the smallest.

In an embodiment, merging the associated ground elements includes following steps:

> the target map element in the target map is selected for the associated arrow, stop line, and zebra crossing to replace the associated arrow, stop line, and zebra crossing; and
> the lane line in the real-time perception and mapping result is selected for the associated lane lines, and the lane line in the target map is used to splice and complement the lane line in the real-time perception and mapping result.

Therefore, by merging the real-time perception and mapping result of the vehicle and the target map element, the merged map is finally outputted, including the merged ground elements on the associated ground elements and the unassociated ground elements. A unified map is outputted for use for the vehicle intelligent driving system and the large-screen display module.

In this embodiment, with above solution, when the vehicle is detected to arrive at or approach the preset target scenario area, the vehicle coordinate system and the map coordinate system are matched based on the ground element to obtain the matching result; and according to the matching result, the real-time perception and mapping result of the vehicle is merged with the target map element, and the merged map is outputted. The matching of the vehicle coordinate system and the map coordinate system includes rough matching and fine matching. The high-precision pose conversion matrix is acquired by fine matching, and is used to perform pose conversion on the target map element, for converting the target map element from the map coordinate system to the vehicle coordinate system, to obtain a high-precision matching result. Further, when the real-time perception and mapping result of the vehicle is merged with the target map element, the arrow, stop line, and zebra crossing in the real-time perception and mapping result of the vehicle are searched and associated by following a principle that they are the same type and the spatial distance between them are the smallest, and the lane line in the real-time perception and mapping result of the vehicle is searched and associated by following a principle that the parallel distance between lines is the smallest.

With the solution of the embodiment of the present invention, it is possible to use high-precision maps, preferably lightweight high-precision maps, only in the preset target scenario area (for instance complex scenario areas such as a large junction and a roundabout), thereby greatly reducing the amount of map data, and further reducing the costs for real-time generation and maintenance of the map. In addition, because only a small amount of map matching data is required, it also realizes rapid map matching in extreme scenarios such as a large junction, and improves the user's driving experience. Further, traditional maps only rely on single-point GNSS positioning, and have positioning precision at the level of 1-10 m, resulting in that the urban occlusion environment cannot be positioned at all and the commonly used iterative closest point matching method is not robust enough in this case, and it is easy to make a wrong match; compared with the traditional maps, the solution of this embodiment improves the matching accuracy, preferably both matching accuracy and robustness, of the map by the rough matching and the fine matching of the vehicle coordinate system and the map coordinate system. Furthermore, when the real-time perception and mapping result of the vehicle is merged with the target map element, the corresponding principles are used to search and associate, which can improve the accuracy of merging processing and the precision of map fusion.

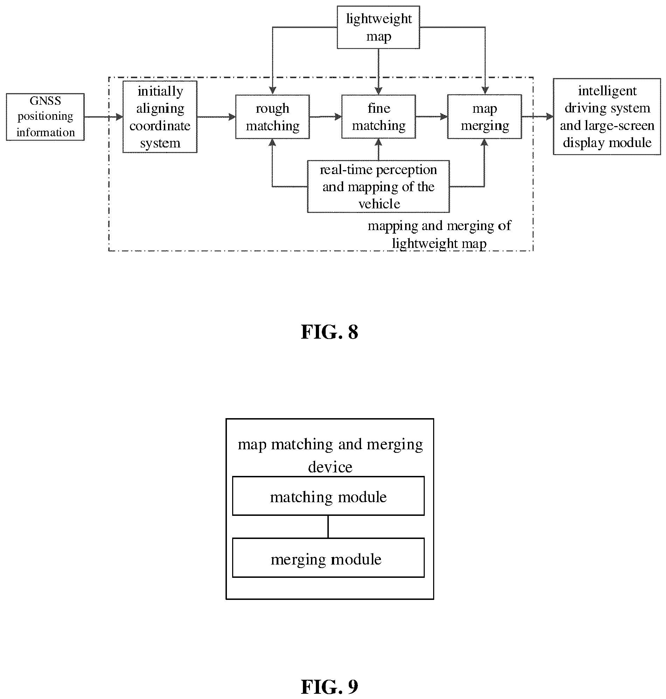

The complete process of online real-time matching and merging of lightweight high-precision map according to embodiment of the present invention can be referred to FIG. 8.

It should be noted that the solution of the embodiment of the present invention renders it possible to only set high-precision maps, preferably lightweight high-precision maps, in complex scenarios such as a large junction and a roundabout, and also renders it possible to only provide information with signs on the map, such as a lane line, a ground arrow, a pedestrian crossing, a stop line, etc. This greatly reduces the data volume of the map and the costs for generation and maintenance of map.

Compared with the prior art, the solution of the embodiment of the present invention proposes a complete robust map matching algorithm, which can complete robust rough matching only depending on a small amount of map elements such as a ground arrow, a ground dashed line, a stop line, a pedestrian crossing, etc., so that the matching error between the vehicle and the high-precision map, preferably lightweight high-precision map, can be reduced within half a lane. Different from traditional matching solutions such as ICP, the solution of the embodiment of the present invention is not sensitive to the initial value and has high robustness. Moreover, it can use as few map elements as possible to complete the matching and merging of the real-time perception and mapping result of the vehicle and map elements, reducing the cost for generation and maintenance of map.

In addition, as shown in FIG. 9, an embodiment of the present invention also proposes a map matching and merging device, which includes:

a matching module, configured to match the pose of a vehicle with the map coordinate system based on ground element when the vehicle is detected to arrive at or approach a preset target scenario area to obtain a matching result; and

a merging module, configured to merge a real-time perception and mapping result of the vehicle with a target map element according to the matching result, and output the merged map.

For the principle and implementation process of map matching and merging in this embodiment, please refer to the above-mentioned embodiments, and details will not be repeated here.

In addition, an embodiment of the present invention also provides a navigation apparatus, and the navigation device includes a memory, a processor, and a computer program stored in the memory and capable of running on the processor. When the computer program is executed by the processor, the computer program implements the above-mentioned map matching and merging method.

Since the map matching and merging program is executed by the processor, all the technical solutions of the above-mentioned embodiments are adopted, it has at least all the beneficial effects brought by all the technical solutions of the above-mentioned embodiments, and will not be repeated here.

In addition, an embodiment of the present invention also provides a computer-readable storage medium, on which a computer program is stored, and the compute program is configured to implement the above-mentioned map matching and merging method when it is executed by a processor.

Since the map matching and merging program is executed by the processor, all the technical solutions of the above-mentioned embodiments are adopted, it has at least all the beneficial effects brought by all the technical solutions of the above-mentioned embodiments, and will not be repeated here.

In the map matching and merging method, the device, the apparatus, and the storage medium provided in the embodiments of the present invention, when the vehicle is detected to arrive at or approach the preset target scenario area, the vehicle coordinate system and the map coordinate system are matched based on ground elements to obtain a matching result; and according to the matching result, the real-time perception and mapping result of the vehicle and the target map element are merged, and the merged map is outputted. With the solution of the embodiment of the present invention, it is possible to use high-precision maps, preferably lightweight high-precision maps, only in preset target scenario areas (for instance complex scenario areas such as a large junction and a roundabout), thereby greatly reducing the amount of map data, and further reducing the cost for generation and maintenance of maps. In addition, because only a small amount of map matching data is required, it also realizes rapid map matching in extreme scenarios such as a large junction, and improves the user's driving experience.

It should be noted that the term herein "comprise", "include" or any other variation thereof is intended to cover a non-exclusive inclusion such that a process, a method, or an article including a set of elements includes not only those elements, but also includes other elements not expressly listed, or also includes inherent elements in such process, method, or article. Without further limitations, an element defined by the phrase "comprising a ..." or "including a ..." does not exclude the presence of additional identical elements in the process, method, or article comprising said element.

The serial numbers of the above embodiments of the present invention are intended for description only, and do not represent the advantages and disadvantages of the embodiments.

Through the description of the above embodiments, those skilled in the art can clearly understand that the method of the above embodiments can be implemented by means of software plus a necessary general hardware platform, and of course it can also be implemented by hardware, but in many cases, the former is the better implementation. Based on this understanding, the essential part of the technical solution of the present invention or the part that contributes to the prior art can be embodied in the form of a software product. The computer software product is stored in a storage medium (such as a ROM/RAM, a magnetic disk, an optical disk, etc.) as described above, and includes several instructions to make a terminal device (such as a mobile phone, a computer, a server, a controlled terminal, or a network device, etc.) perform the method of each embodiment of the present invention.

The above only describes the preferred embodiments of the present invention, which do not limit the patent scope of the present invention. Any equivalent structure or equivalent process changes made by using the content of the specification and drawings of the present invention, or directly or indirectly applied in other related technical fields, are equally included in the patent protection scope of the present invention.

**Claims**

1.   A map matching and merging method, **characterized in that**, the method comprises:

> when a vehicle is detected to arrive at or approach a preset target scenario area, matching a vehicle coordinate system and a map coordinate system based on a ground element to obtain a matching result; and
> according to the matching result, merging a real-time perception and mapping result of the vehicle with a target map element, and outputting a merged map.

2.   The method according to claim 1, **characterized in that**, when a vehicle is detected to arrive at or approach a preset target scenario area, initially aligning the vehicle coordinate system with the map coordinate system to obtain an initial conversion relationship from the map coordinate system to the vehicle coordinate system, basing on said initial conversion relationship and matching a vehicle coordinate system and a map coordinate system based on a ground element to obtain a matching result.

3.   The method according to claim 2, **characterized in that**, the step of basing on said initial conversation relationship and matching a vehicle coordinate system and a map coordinate system based on a ground element to obtain a matching result comprises:

> determining first ground elements and second ground elements in the real-time perception and mapping result of the vehicle and a target map;
> based on the first ground elements in the real-time perception and mapping result of the vehicle and the target map, and in combination with the initial conversion relationship, calculating a rough-precision pose conversion matrix from the map coordinate system to the vehicle coordinate system to obtain a rough matching result;
> based on the rough matching result, performing iterative closest point matching on the second ground elements in the real-time perception and mapping result of the vehicle and the target map to obtain a high-precision pose conversion matrix; and
> converting a pose of the target map element by the high-precision pose conversion matrix, for converting the target map element from the map coordinate system to the vehicle coordinate system to obtain a high-precision matching result.

4.   The method according to claim 1, **characterized in that**, said when a vehicle is detected to arrive at or approach a preset target scenario area, the step of matching a vehicle coordinate system and a map coordinate system based on a ground element to obtain a matching result comprises:

> when the vehicle is detected to arrive at or approach the preset target scenario area, initially aligning the vehicle coordinate system with the map coordinate system to obtain an initial conversion relationship from the map coordinate system to the vehicle coordinate system;
> determining first ground elements and second ground elements in the real-time perception and mapping result of the vehicle and a target map;
> based on the first ground elements in the real-time perception and mapping result of the vehicle and the target map, and in combination with the initial conversion relationship, calculating a rough-precision pose conversion matrix from the map coordinate system to the vehicle coordinate system to obtain a rough matching result;
> based on the rough matching result, performing iterative closest point matching on the second ground elements in the real-time perception and mapping result of the vehicle and the target map to obtain a high-precision pose conversion matrix; and

converting a pose of the target map element by the high-precision pose conversion matrix, for converting the target map element from the map coordinate system to the vehicle coordinate system to obtain a high-precision matching result.

5. The method according to claim 3 or claim 4, **characterized in that**, the step of said based on the first ground elements in the real-time perception and mapping result of the vehicle and the target map, and in combination with the initial conversion relationship, calculating a rough-precision pose conversion matrix from the map coordinate system to the vehicle coordinate system to obtain a rough matching result, comprises:

encoding geometric information of the first ground elements in the real-time perception and mapping result of the vehicle and the target map, respectively, to obtain an encoding result;
based on internal consistency of the encoding result, constructing and solving a constraint equation to obtain a best matching result between the first ground elements in the real-time perception and mapping result of the vehicle and the target map; and
according to the best matching result and in combination with the initial conversion relationship, calculating a rough-precision pose conversion matrix from the map coordinate system to the vehicle coordinate system to obtain a rough matching result.

6. The method according to claim 3 or claim 4, **characterized in that**, the step of said according to the matching result, merging a real-time perception and mapping result of the vehicle with a target map element, comprises:

according to the high-precision matching result, associating the ground element in the real-time perception and mapping result of the vehicle with matrix-converted target map elements; and
merging associated ground elements.

7. The method according to claim 6, **characterized in that**, the step of said according to the high-precision matching result, associating the ground element in the real-time perception and mapping result of the vehicle with matrix converted target map elements, comprises:
according to the high-precision matching result and the matrix-converted target map elements, searching and associating an arrow, a stop line, and a zebra crossing in the real-time perception and mapping result of the vehicle by following a principle that they are the same type and a spatial distance between them is the smallest, and searching and associating a lane line in the real-time perception and mapping result of the vehicle by following a principle that a parallel distance between lines is the smallest.

8. The method according to claim 6, **characterized in that**, the step of said merging associated ground elements comprises:

selecting the target map element for the associated arrow, stop line, and zebra crossing to replace them; and
selecting the lane line in the real-time perception and mapping result of the vehicle for the associated lane line, and using the lane line in the target map to splice and complement the lane line in the real-time perception and mapping result.

9. The method according to any one of claims 3-8, **characterized in that**, the step of said when the vehicle is detected to arrive at or approach the preset target scenario area, initially aligning the vehicle coordinate system with the map coordinate system to obtain an initial conversion relationship from the map coordinate system to the vehicle coordinate system comprises:

when the vehicle is detected to arrive at or approach the preset target scenario area, acquiring GNSS positioning information of the vehicle and dead reckoning trajectory of the vehicle;
according to the GNSS positioning information of the vehicle, selecting driving trajectory data of the vehicle over a preset length; and
aligning the dead reckoning trajectory with the driving trajectory data to obtain the initial conversion relationship from the map coordinate system to the vehicle coordinate system.

10. The method according to any one of claims 3-8, **characterized in that**, the preset target scenario comprises at least one of the following: an junction area of a road and a roundabout area; and/or,

the first ground element comprises at least one of the following: a ground arrow, a stop line, and a zebra crossing;

and/or,

the second ground element comprises at least one of the following: a solid lane line, a dashed line segment, and a ground arrow.

**11.** The method according to any one of claims 3-8, **characterized in that**, the first ground element is determined by a confidence level.

**12.** A map matching and merging device, **characterized in that**, the device comprises:

a matching module, configured to match a pose of a vehicle with a map coordinate system based on ground element when the vehicle is detected to arrive at or approach a preset target scenario area to obtain a matching result; and
a merging module, configured to merge a real-time perception and mapping result of the vehicle with a target map element according to the matching result, and output a merged map.

**13.** The device according to claim 10, **characterized in that**, matching module is configured to initially align the vehicle coordinate system with the map coordinate system to obtain an initial conversion relationship from the map coordinate system to the vehicle coordinate system, and match a pose of a vehicle with a map coordinate system based on ground element and said initial conversion relationship when the vehicle is detected to arrive at or approach a preset target scenario area to obtain a matching result

**14.** A navigation apparatus, **characterized in that**, the navigation apparatus comprises a memory, a processor, and a computer program stored in the memory and capable of running on the processor, and configured to implement the map matching and merging method according to any one of claims 1-11 when it is executed by the processor.

**15.** A computer-readable storage medium, **characterized in that**, a computer program is stored on the computer-readable storage medium, and configured to implement the map matching and merging method according to any one of claims 1-11 when it is executed by the processor.

**FIG. 1**

S101

when the vehicle is detected to arrive at or approach the preset target scenario area, matching the vehicle coordinate system and the map coordinate system based on a ground element to obtain a matching result

S102

according to the matching result, merging the real-time perception and mapping result of the vehicle and the target map element, and outputting the merged map

**FIG. 2**

**FIG. 3**

**FIG. 4a**

**FIG. 4b**

when the vehicle is detected to arrive at or approach the preset target scenario area, initially aligning the vehicle coordinate system and the map coordinate system to obtain an initial conversion relationship from the map coordinate system to the vehicle coordinate system — S1011

determining the first ground elements and the second ground elements in the real-time perception and mapping result of the vehicle and the target map — S1012

based on the first ground elements in the real-time perception and mapping results of the vehicle and the target map, and in combination with the initial conversion relationship, calculating a rough-precision pose conversion matrix from the map coordinate system to the vehicle coordinate system to obtain a rough matching result — S1013

based on the rough matching result, performing iterative closest point matching on the second ground elements in the real-time perception and mapping result of the vehicle and the target map to obtain a high-precision pose conversion matrix — S1014

converting the pose of the target map element by the high-precision pose conversion matrix, for converting the target map element from the map coordinate system to the vehicle coordinate system to obtain a high-precision matching result — S1015

**FIG. 5**

$$u_1 \quad a'$$
$$a$$
$$u_2 \quad b' \quad e'$$
$$b$$
$$u_3$$
$$u_4 \quad c'$$
$$c$$
$$u_5$$
$$d'$$

**FIG. 6a**

**FIG. 6b**

| according to the high-precision matching result, associating the ground elements in the real-time perception and mapping result of the vehicle with the matrix-converted target map elements | S1021 |

| merging the associated ground elements | S1022 |

| outputting the merged map elements and unassociated ground elements in the map | S1023 |

**FIG. 7**

```
                                        ┌─────────────┐
                                        │ lightweight │
                                        │     map     │
                                        └─────────────┘
     ┌─────────────┐  ┌─────────────┐  ┌──────────┐  ┌──────────┐  ┌──────────┐  ┌─────────────────┐
     │    GNSS     │  │  initially  │  │  rough   │  │   fine   │  │   map    │  │   intelligent   │
     │ positioning │─▶│  aligning   │─▶│ matching │─▶│ matching │─▶│ merging  │─▶│ driving system  │
     │ information │  │ coordinate  │  └──────────┘  └──────────┘  └──────────┘  │ and large-screen│
     └─────────────┘  │   system    │                                            │ display module  │
                      └─────────────┘  ┌────────────────────────┐                └─────────────────┘
                                       │  real-time perception  │
                                       │   and mapping of the   │
                                       │        vehicle         │
                                       └────────────────────────┘
                                            mapping and merging of
                                               lightweight map
```

**FIG. 8**

```
┌─────────────────────────────────────┐
│   map matching and merging           │
│             device                   │
│  ┌─────────────────────────────────┐ │
│  │      matching module            │ │
│  └─────────────────────────────────┘ │
│                  │                    │
│  ┌─────────────────────────────────┐ │
│  │      merging module             │ │
│  └─────────────────────────────────┘ │
│                                      │
└─────────────────────────────────────┘
```

**FIG. 9**

Europäisches
Patentamt

European
Patent Office

Office européen
des brevets

# EUROPEAN SEARCH REPORT

**Application Number**

EP 23 21 1375

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/349728 A1 (LEE JINSANG [KR] ET AL) 3 November 2022 (2022-11-03) * paragraphs [0054], [0137] - [0139] * ----- | 1-15 | INV. G01C21/30 G01C21/00 |
| X | CN 114 910 083 A (ZHIDAO NETWORK TECH BEIJING CO LTD) 16 August 2022 (2022-08-16) * the whole document * ----- | 1-15 | |
| X | EP 3 869 157 A1 (HUAWEI TECH CO LTD [CN]) 25 August 2021 (2021-08-25) * figure 3 * ----- | 1-15 | |

**TECHNICAL FIELDS SEARCHED (IPC)**

G01C

The present search report has been drawn up for all claims

| Place of search | Date of completion of the search | Examiner |
|---|---|---|
| The Hague | 31 May 2024 | Asthalter, Tanja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 1375

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2024

| Patent document cited in search report | Publication date | Patent family member(s) | Publication date |
|---|---|---|---|
| US 2022349728 A1 | 03-11-2022 | US 2022349728 A1 | 03-11-2022 |
| | | WO 2020145443 A1 | 16-07-2020 |
| CN 114910083 A | 16-08-2022 | NONE | |
| EP 3869157 A1 | 25-08-2021 | BR 112021010452 A2 | 24-08-2021 |
| | | CN 111238497 A | 05-06-2020 |
| | | EP 3869157 A1 | 25-08-2021 |
| | | JP 2022509286 A | 20-01-2022 |
| | | US 2021293564 A1 | 23-09-2021 |
| | | WO 2020108207 A1 | 04-06-2020 |

EPO FORM P0459

For more details about this annex : see Official Journal of the European Patent Office, No. 12/82